# EUROPÄISCHE PATENTSCHRIFT

(11) **EP 1 102 691 B1**
(45) Veröffentlichungstag und Bekanntmachung des Hinweises auf die Patenterteilung: **02.11.2006**
(21) Anmeldenummer: 99948689.7
(22) Anmeldetag: 26.07.1999
(51) Int. Cl.: B60R 21/06

(54) **EINFACHES RÜCKHALTENETZ MIT UNNACHGIEBIGEN HALTEBÄNDERN**
SIMPLE RETAINING NET WITH RETAINING STRAPS
FILET DE RETENUE SIMPLE MUNI DE BANDES DE RETENUE

(30) Priorität: 04.08.1998 DE 19835230
(43) Veröffentlichungstag der Anmeldung: 30.05.2001
(73) Patentinhaber: BOS GmbH & Co. KG, 73760 Ostfildern (DE)
(72) Erfinder: EHRENBERGER, Marina, D-73730 Esslingen (DE); ELSÄSSER, Mathias, D-73262 Reichenbach (DE); SEEL, Holger, D-71134 Aidlingen (DE); AMENT, Eduard, D-73773 Aichwald (DE)
(74) Vertreter: Rüger, Barthelt & Abel Patentanwälte
(86) Internationale Anmeldenummer: PCT/DE1999/002287
(87) Internationale Veröffentlichungsnummer: WO 2000/007852

(56) Entgegenhaltungen:
- EP-A- 0 642 955
- DE-A- 2 529 390
- DE-A- 4 441 610
- DE-C- 19 730 801
- DE-U- 29 712 251
- US-A- 5 529 341

## Beschreibung

Bei Kombi-PKW ist in keiner Funktionsstellung der Rücksitzbank der Laderaum vollständig gegenüber dem Fahrgastraum abgeschlossen. Vielmehr existiert auch bei aufgerichteter Rücksitzlehne zwischen dieser und dem Dachhimmel eine Öffnung, durch die hindurch bei einem Auffahrunfall Gegenstände aus dem Laderaum in den Fahrgastraum geschleudert werden können. Um dies zu verhindern, werden Rückhaltenetze verwendet, die diese Öffnung hinreichend abriegeln sollen.

Ähnliche Verhältnisse herrschen bei sogenannten Kompakt-PKW, wenn die Rücksitzlehne umgelegt ist.

Gerade letztere benötigen eigentlich nur für den Betriebszustand mit umgeklappter Rücksitzbank ein Rückhaltenetz, da bei aufgerichteter Rücksitzlehne ein hinreichender Schutz durch die Hutablage und die Rücksitzlehne selbst gegeben ist. Zumindest für diese Anwendungsfälle lohnt es sich nicht, für das Sicherheitsnetz ein technisch aufwendiges Gehäuse vorzusehen, in das es bei Nichtgebrauch eingewickelt wird. Diese Gehäuse sind obendrein verhältnismäßig sperrig und schwer unterzubringen, wenn sie im Nichtgebrauch aus dem Fahrzeug herausgenommen sind.

Es ist deswegen aus der DE 197 30 801 bekannt, ein Rückhaltenetz zu verwenden, das ohne Gehäuse auskommt und bei dem die untere Kante mit Hilfe von Bändern und Haken in dem Fahrzeug verankert wird.

Diese Bänder sind undehnbar und es ist ein entsprechendes Stück jedes Bandes mit einem elastisch dehnbaren Band überbrückt. In diesem Überbrückungsbereich hängt das undehnbare Band sowohl im nicht aufgespannten Zustand als auch im aufgespannten Zustand des Rückhaltenetzes schlaff. Die Vorspannung für das Rückhaltenetz wird von dem jeweiligen Stück des elastisch dehnbaren Bandes gebildet.

Somit ist ein, eine Schlaufe bildendes Zugmittel und ein am Ende des Zugmittels angreifendes Vorspannmittel aus DE 197 30 801 ebenfalls bekannt.

Wenn im Crashfall ein Gegenstand aus dem Laderaum gegen das Rückhaltenetz geschleudert wird, gibt zunächst das elastisch dehnbare Band nach, bis die auftretende Zugkraft von dem zuvor überbrückten Abschnitt des undehnbaren Bandes aufgenommen wird.

Diese Lösung ist zwar sehr einfach und auch in der Lage, Karosserietoleranzen auszugleichen bzw. das Einhängen der Haken zu ermöglichen, ist aber mit einem Nachteil behaftet. Zufolge des dehnbaren Abschnittes kann sich das Rückhaltenetz verhältnismäßig stark in den Fahrgastraum vorwölben, ehe das undehnbare Band über seine volle Länge wirksam wird.

Ausgehend hiervon ist es Aufgabe der Erfindung, eine einfache Rückhaltenetzanordnung zu schaffen, die sich weniger stark vorwölbt und somit schneller anspricht.

Diese Aufgabe wird erfindungsgemäß durch die Rückhaltenetzanordnung mit den Merkmalen des Anspruches 1 gelöst.

Im Gegensatz zum Stand der Technik, bei dem das elastisch dehnbare Glied parallel über dem Abschnitt des elastisch undehnbaren Zugmittels liegt, ist bei der Erfindung das Vorspannmittel funktionsmäßig in Serie zu dem elastisch undehnbaren Zugmittel angeordnet. Dadurch wird im eingehängten Zustand ein sauberes Straffhalten des Rückhaltenetzes gewährleistet. Andererseits liegt zwischen dem Rückhaltenetz und der Einhängeeinrichtung ausschließlich ein gestraffter Abschnitt des undehnbaren Zugmittels. Das Rückhaltenetz kann somit sofort ansprechen, weil seine Unterkante nicht zunächst ein Stück Weges zurücklegen muss, ehe eine vollständige Straffung von elastisch dehnbaren Teile erfolgt ist. Bei der erfindungsgemäßen Lösung liegen die Vorspannmittel nicht im Kräfteweg, längs dem die Kräfte aus dem Rückhaltenetz in die Karosserie eingeleitet werden.

Die Klemmeinrichtung wirkt mit dem undehnbaren Zugmittel zusammen und verbindet das Rückhaltenetz mit der Einhängeeinrichtung, die zum Einhängen in Haken oder Ösen der Fahrzeugkarosserie vorgesehen ist.

Aufgrund des schlaufenförmigen Verlaufes des undehnbaren Zugmittels koppelt die Klemmeinrichtung das Vorspannmittel von dem Kraftübertragungsweg zwischen Rückhaltenetz und Karosserie ab.

Für die Verankerung des Vorspannmittels kommen mehrere Möglichkeiten in Betracht. Das Vorspannmittel kann einenends mittelbar oder unmittelbar mit dem freien, d.h. von dem Rückhaltenetz abliegenden Ende des Zugmittels verbunden sein, während das andere Ende an dem Rückhaltenetz selbst befestigt ist, in der Weise, dass das Vorspannmittel und das Zugmittel eine vollständig geschlossene Schlaufe bilden. Diese Schlaufe wird von dem Vorspannmittel in die verkürzte Stellung gezogen. Mit Hilfe der in die Schlaufe eingehängten Klemmeinrichtung und der Verankerungseinrichtung wird die Schlaufe beim Aufspannen des Rückhaltenetzes entsprechend in die Länge gezogen und durch das Vorspannmittel straff gehalten.

Bei einer anderen Ausführungsform ist es möglich, das andere Ende des Vorspannmittels mit der Klemmeinrichtung zu verbinden, so dass das Vorspannmittel bestrebt ist, das Schlaufenende in Richtung auf die benachbarte Kante des Rückhaltenetzes zurückzuziehen.

Je nach Ausführungsform ist das Vorspannmittel von einem elastisch dehnbaren Glied oder einem Druckglied gebildet.

Ein besonders sicheres Halten des Rückhaltenetzes wird erreicht, wenn die Klemmeinrichtung eine selbstverstärkende oder Servowirkung zeigt in der Weise, dass die Klemmkraft, mit der das Zugmittel festgehalten wird, umso größer ist je höher die Zugkraft ist, die zwischen der Einhängeeinrichtung und dem Rückhaltenetz wirksam ist. Diese Servowirkung kann durch entsprechende geometrische Gestaltung der Klemmflächen erreicht werden.

Die Klemmeinrichtung weist zwei Klemmelemente auf, zwischen denen das Zugmittel hindurchverläuft. Eines der beiden Klemmelemente ist mit der Einhängeeinrichtung verbunden.

Eine gute Servowirkung lässt sich erzielen, wenn das zweite Klemmelement gleichzeitig die Umlenkeinrichtung ist, um die das Zugmittel unter Ausbildung der Schlaufe herumgeführt ist. Die dadurch entstehende starke Umschlingung von ca. 180° verstärkt wegen der Reibung zwischen dem Klemmelement und dem Zugmittel die von der Klemmeinrichtung aufgebrachte Haltekraft.

Wenn sich die Vorspannmittel an der Klemmeinrichtung abstützen, können Widerlagermittel vorgesehen sein, deren Abstand von dem zweiten Klemmelement veränderbar ist. Dadurch lässt sich ein besonders Kräfte sparendes Einhängen der Einhängeeinrichtung in die fahrzeugseitigen Halter erreichen.

Eine konstruktiv einfache Lösung wird erhalten, wenn die Klemmeinrichtung ein Gehäuse aufweist, in das das Zugmittel hineinführt und in dem das zweite Klemmelement angeordnet ist. In diesem Gehäuse ist die Einhängeeinrichtung in Richtung parallel zu der Längserstreckung des Zugmittels verschieblich gelagert.

Das zweite Klemmelement kann von einer Stange gebildet sein, die in dem Gehäuse starr angeordnet ist. Eine andere Möglichkeit besteht darin, die Stange quer zur Bewegungsrichtung der Einhängeeinrichtung in dem Gehäuse beweglich zu lagern, um die Verklemmung mit dem ersten Klemmelement zu gewährleisten.

Die an dem Gehäuse bewegliche gelagerte Stange kann mit ihren beiden Enden jeweils mit einem radial verlaufenden Arm versehen sein, der an seinem freien Ende einen parallel zu der Stange verlaufenden Fortsatz trägt. Die beiden Arme liegen in einer gemeinsamen Ebene und sind dazu eingerichtet, dass sich ihre Fortsätze mit entsprechenden Hinterschneidungen an der Einhängeeinrichtung verhaken, um die Klemmkraft unmittelbar in die Einhängeeinrichtung einzuleiten, an der das erste Klemmelement ausgebildet ist.

Dieses erste Klemmelement kann von einer Kante gebildet sein, die Teil eines Lochrandes ist oder eine durch einen Umbug entstandene Leiste an der Einhängeeinrichtung.

Im Übrigen sind Weiterbildungen der Erfindung Gegenstand von Unteransprüchen.

In der Zeichnung sind Ausführungsbeispiele des Gegenstandes der Erfindung dargestellt. Es zeigen:
Fig. 1 das zwischen dem Dach eine Kraftfahrzeuges und der Rücksitzlehne aufgespannte Rückhaltenetz, in einer perspektivischen Darstellung mit teilweise aufgebrochener Fahrzeugkarosserie,
Fig. 2 das Rückhaltenetz nach Fig. 1, in einer vergrößerten Darstellung,
Fig. 3 eines der unteren Verankerungsmittel in einer vergrößerten Darstellung und einer Ansicht entsprechend Fig. 2,
Fig. 4 die Verankerungseinrichtung nach Fig. 3, in einem Längsschnitt,
Fig. 5 Teile der Verankerungseinrichtung nach Fig. 3, in einer perspektivischen Explosionsdarstellung, teilweise aufgebrochen,
Fig. 6 eine vergrößerte Darstellung eines Ausschnittes aus Fig. 4, unter Veranschaulichung des Verlaufs des Gurtbandes,
Fig. 7 ein weiteres Ausführungsbeispiel der Verankerungseinrichtung, in einer perspektivischen Darstellung, teilweise aufgebrochen,
Fig. 8 ein weiteres Ausführungsbeispiel für die Verankerungseinrichtung, in einer perspektivischen Darstellung und teilweise aufgebrochen und
Fig. 9 und 10 die Verankerungseinrichtung nach Fig. 8, in einem Längsschnitt, unter Veranschaulichung zweier Funktionsstellungen.

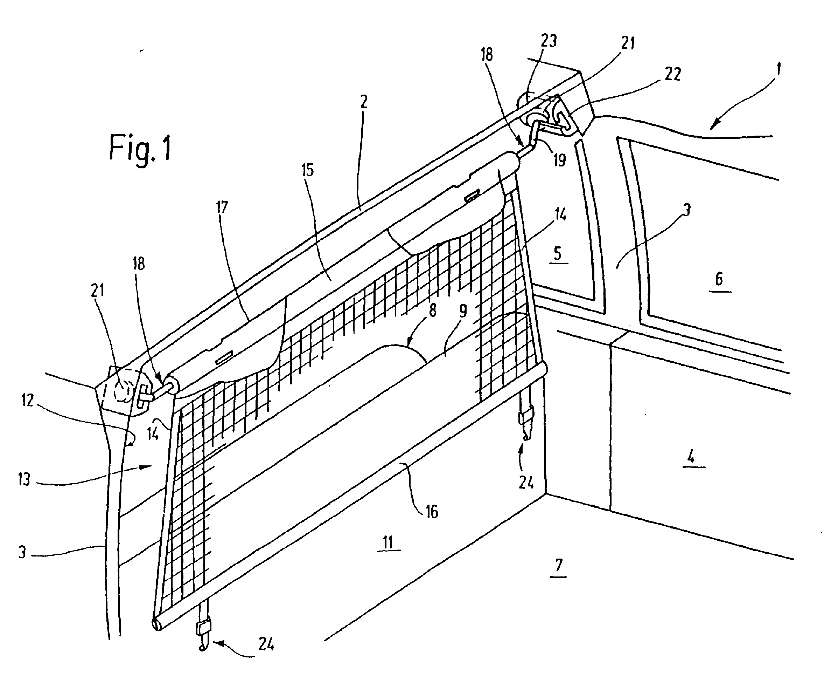

Fig. 1 zeigt in aufgebrochener Darstellung einen Heckbereich 1 eines Kombi-PKW. Der Heckbereich 1 ist perspektivisch etwa aus der Sicht des weggebrochenen linken seitlichen Heckfensters dargestellt und weist ein Dach 2 auf, das seitlich von zwei C-Säulen 3 getragen wird. Vor der C-Säule 3 liegt unterhalb des Daches 2 und oberhalb einer Seitenwand 4 ein hinteres Seitenfenster 5, während hinter der C-Säule 3 ein weiteres hinteres Seitenfenster 6 angeordnet ist. Die Anordnung der Seitenfenster 5 und 6 ist auf der linken Seite des Heckbereiches spiegelbildlich zu denken. Nach unten wird der Heckbereich 1 von einer im Wesentlichen ebenen Ladefläche abgeschlossen.

Zwischen den beiden hinteren Seitenfenstern 5 befindet sich auf der Höhe der C-Säulen 3 eine Rücksitzbank 8, deren Rücksitzlehne 9 mit einer Rückseite 11 etwa zwischen den beiden C-Säulen 3 steht.

Zwischen der Unterkante des Daches 2 und der Oberkante der Rücksitzlehne 9 befindet sich eine Öffnung 12, über die ein vor der Rücksitzlehne 9 befindlicher Fahrgastraum mit dem dahinter befindlichen Laderaum des Heckbereiches 1 in Verbindung steht.

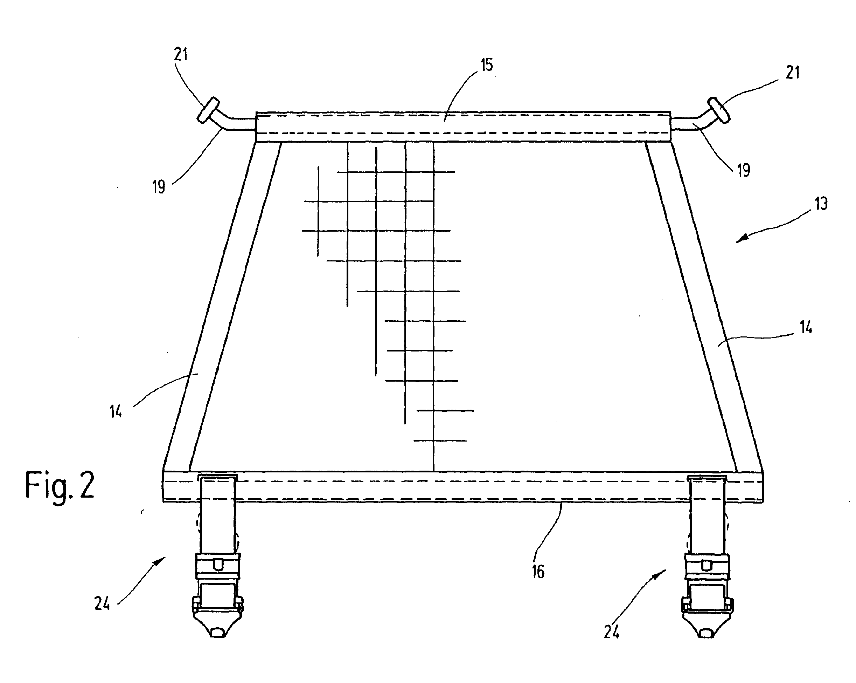

Um zu verhindern, dass bei einem Crash Gegenstände aus dem Heckbereich 1 in den Fahrgastraum geschleudert werden, wird die Öffnung 12 durch ein Rückhaltenetz 13 verschlossen. Das Rückhaltenetz 13 ist in Fig. 2 in einer Draufsicht gezeigt.

Das Rückhaltenetz 13 ist trapezförmig und wird von zwei seitlichen, gegebenenfalls durch Bänder eingefassten Kanten 12, einer oberen Kante 15 sowie einer unteren Kante 16 begrenzt. Die obere Kante 15 ist als Schlaufe ausgeführt, in der eine Zugstange oder Strebe 17 steckt. Diese Strebe 17 ist rohrförmig und enthält Energie verzehrende Elemente 18. Aus den Energie verzehrenden Elementen 18 stehen Befestigungsglieder 19 vor, die endseitig mit pilzförmigen Köpfen 21 versehen sind. Mit diesen pilzförmigen Köpfen 21 sind die Verankerungsglieder in T-Nuten 22 von karosserieseitigen Aufnahmeelementen 23 eingesetzt.

Die Unterkante 16 ist ebenfalls als Schlaufe ausgebildet und enthält in dieser Schlaufe eine nicht weiter erkennbare Stange oder Strebe, ebenfalls in Gestalt eines Rohres.

Ferner sind in der Nähe der Enden zwei weitere untere Verankerungsmittel 24 vorgesehen, die in nicht weiter erkennbare Bügel oder Ösen an der Rückseite der Rücksitzlehne 9 eingehängt sind.

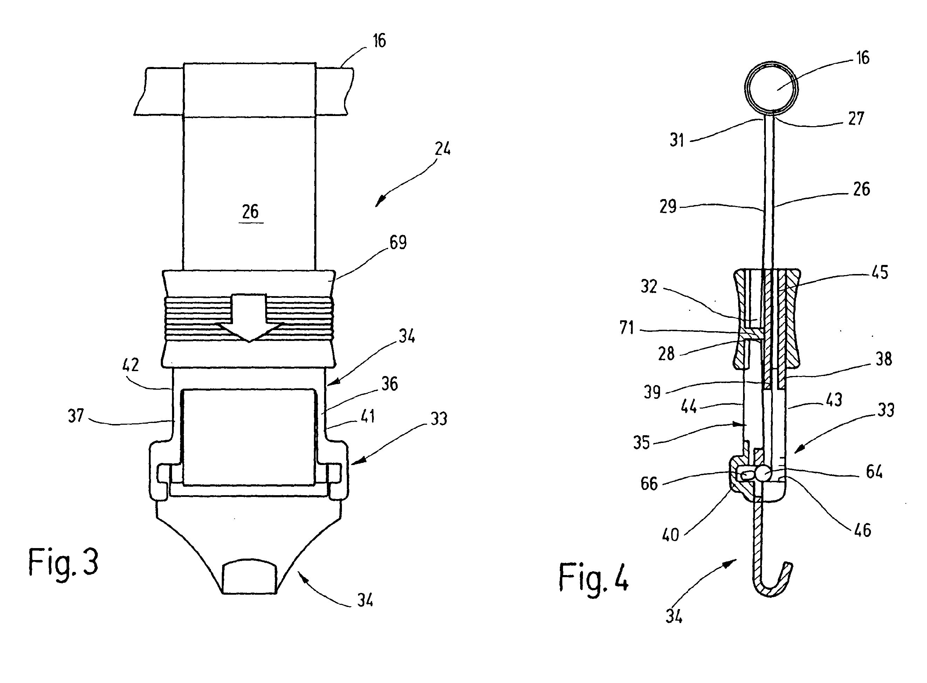

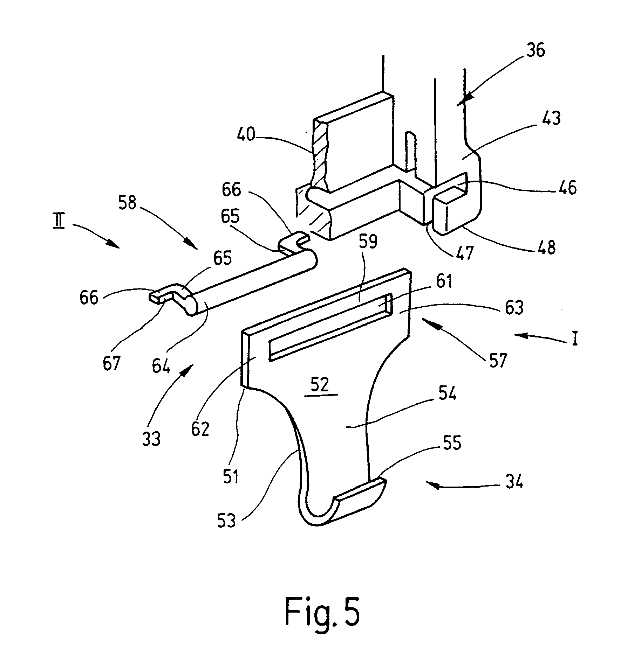

Die beiden unteren Verankerungsmittel 24 sind untereinander gleich und werden nachfolgend anhand der Fig. 3 bis 6 hinsichtlich ihres Aufbaus und ihrer Funktionsweise erläutert. Dabei zeigen die Figuren lediglich die erfindungswesentlichen Gestaltungselemente, ohne im Einzelnen beispielsweise auf Trennfugen u.dgl. einzugehen, die im Zusammenhang mit der Herstellung bzw. Montage erforderlich sind.

Zu dem unteren Verankerungsmittel 24 gehören ein im Wesentlichen undehnbares Gurtband 26 mit einem oberen Ende 27 sowie einem unteren Ende 28, ein dehnbares Band 29 mit einem oberen Ende 31 sowie einem unteren Ende 32, eine Klemmeinrichtung 33 sowie eine Einhängeeinrichtung 34. Schließlich gehört zu dem Verankerungsmittel 24 noch ein Halter 35, der aus Kunststoff besteht.

Der Halter 35 weist zwei seitliche, mit Abstand voneinander angeordnete und parallel zueinander verlaufende Längsstege 36 und 37 auf, die am oberen Ende mittels zweier quer verlaufender Wände 38 und 39 und am unteren Ende durch einen Quersteg 40 miteinander verbunden sind.

Die beiden Längsstege 36 und 37 bilden mit ihren Außenseiten 41 und 42 zueinander parallele Schmalseiten des länglichen Halters 35, und zwar bis etwa auf die Höhe des Quersteges 40. An dieser Stelle stehen, wie Fig. 3 zeigt, die Seitenwände 41 und 42 nach außen vor.

Außerdem haben die beiden Längsstege 36 und 37 über die Länge gesehen eine konstante Dicke, gemessen zwischen ihrer Vorderseite 43 und ihrer Rückseite 44. Diese Bedingung ist ebenfalls bis etwa auf die Höhe des Quersteges 40 erhalten. Damit hat der Halter 35, beginnend bei seinem oberen Ende bis hin zu dem Quersteg 40 einen konstanten rechteckigen Querschnitt bezüglich seiner Außenabmessungen.

Die Wand 39 verläuft etwa auf der Mitte jedes Längssteges 36, 37, bezogen auf dessen Dicke, gemessen zwischen der Vorderseite 43 und der Rückseite 44. Die vordere Wand 38 dagegen ist mit der Vorderseite 43 bündig. Auf diese Weise entsteht zwischen den beiden Wänden 38 und 39 ein Führungskanal 45, durch den das Gurtband 26 hindurch verläuft. Die Breite des Führungskanals, d.h. der Abstand der beiden Längsstege 36 und 37 voneinander entspricht der Breite des Gurtbandes 26 zuzüglich eines ausreichenden Spiels. Die lichte Weite des im Querschnitt rechteckigen Führungskanals 45 ist ebenfalls darauf abgestimmt.

Im Bereich seines unteren Endes enthält der Längssteg 36 eine von der Vorderseite 43 ausgehende, im Querschnitt rechteckige Nut 46, die sich in Richtung auf den gegenüberliegenden Längssteg 37 öffnet. Die Längserstreckung der Nut 46 steht auf der Vorderseite 43 senkrecht und sie reicht bis in den Quersteg 40 hinein.

Eine weitere, im Querschnitt rechteckige Nut 47 beginnt an einer Unterseite 48 des Längsstegs 36 und erstreckt sich parallel zu der Vorderseite 43 im Abstand zu dem rückwärtigen Quersteg 40. Die beiden Nuten 46 und 47 schneiden einander, wie dies die Figur erkennen lässt. Sie dienen der Aufnahme und Führung der Klemmeinrichtung 33 sowie der Einhängeeinrichtung 34.

Der andere Längssteg 37 ist im Bereich des Quersteges 40 mit einer spiegelbildlichen Anordnung von Nuten versehen, die den Nuten 46 und 47 entsprechen und mit diesen fluchten.

Die Einhängeeinrichtung 34 besteht aus einem Blechzuschnitt 51 mit einer Vorderseite 52 und einer Rückseite 53. Der Blechzuschnitt 51 weist einen oberen, etwa rechteckigen Abschnitt auf, von dem ausgehend sich der Blechzuschnitt 51 zu einem Halsteil 54 verjüngt, das an seinem unteren freien Ende zu einem Blechhaken 55 hochgebogen ist.

Die Klemmeinrichtung 33 für das undehnbare Gurtband 26 besteht aus einem ersten Klemmelement 57 sowie einem zweiten Klemmelement 58. Das erste Klemmelement 57 wird durch eine gerade Kante 59 eines rechteckigen Langloches 61 gebildet, das in dem oberen Bereich des Blechzuschnittes 51 ausgestanzt ist. Aufgrund der Lage des rechteckigen Langlochs 61 bleiben zwei seitliche Stege 62 und 63 stehen. Die Abmessungen des Langlochs 61 sind auf die Abmessungen des zweiten Klemmelementes 58 abgestimmt.

Das zweite Klemmelement 58 besteht aus einer zylindrischen Stange 64, die an ihren stirnseitigen Enden mit zwei radial wegstehenden Armen 65 versehen ist. Die Arme 65 gehen an ihrem freien Ende in zwei Fortsätze 66 über, die eine zu der Längserstreckung der Stange 64 parallel verlaufende und dieser zugekehrte Anlagefläche 67 bilden.

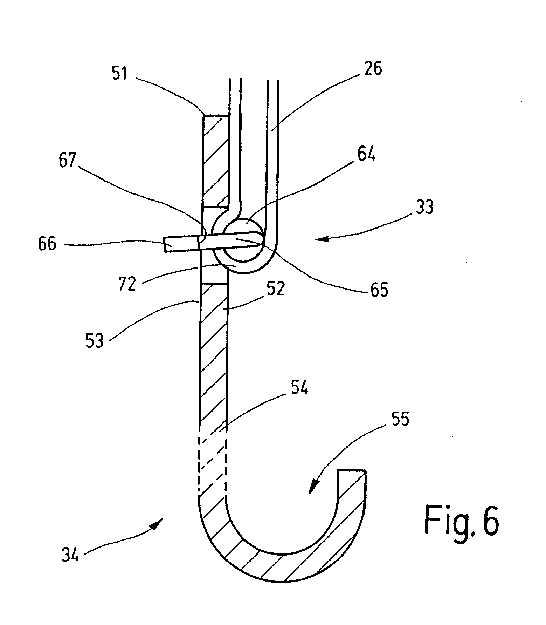

Im montierten Zustand liegen die Anlageflächen 67 der beiden Arme 66 an der Rückseite 53 des Blechzuschnitts 51 an, und zwar im Bereich der seitlichen Stege 62 und 63. In dieser Stellung ragt die zylindrische Stange 64 mehr oder weniger weit nach vorne zu der Vorderseite 52 hin durch das rechteckige Langloch 61 hindurch, wie dies Fig. 6 erkennen lässt.

Auf dem Halter 35 steckt längsverschieblich ein hülsenförmiger Schieber 69, der einen in Richtung auf die Rückseite der Wand 39 vorstehenden Steg 71 trägt. An diesem Steg 71 ist das untere Ende 32 des elastischen Bandes 29 sowie das zweite Ende 28 des im Wesentlichen undehnbaren Bandes 26 verankert. Die oberen Enden 27 und 31 der beiden Bändern 26 und 29 sind in geeigneter Weise mit der Unterkante 16 des Rückhaltenetzes 13 verbunden, beispielsweise indem sie gemeinsam zu einer die Unterkante 14 umschlingenden Schlaufe vernäht sind.

Ausgehend von der Unterkante 16 des Rückhaltenetzes 13 führt das undehnbare Gurtband 26 von oben kommend durch den rechteckigen Kanal 45 hindurch bis zu der Klemmeinrichtung 33. In der Klemmeinrichtung 33 liegt das Gurtband 26 unter Ausbildung eines Schlaufenendes 72 um das zweite Klemmelement 48 in Gestalt der zylindrischen Stange 64 herum, so dass eine Schlaufe mit einem unteren Schlaufenende 72 entsteht (Fig. 6).

Ausgehend von dem Schlaufenende 72 führt das undehnbare Gurtband 26 zwischen dem zweiten Klemmelement 58 und dem oberen Lochrand 59, das sich an der Vorderseite 52 befindet, hindurch, von wo es ausgehend längs der Vorderseite 52 sich nach oben erstreckt. Der aufsteigende Teil, der gleichsam das Leertrum im Lastfalle darstellt, verläuft an der Rückseite der Wand 39 und ist, wie bereits erwähnt, mit seinem freien Ende 28 an dem Steg 71 befestigt. Das elastisch dehnbare Band 29 beginnt ebenfalls bei dem Steg 71 und erstreckt sich neben der Rückseite der Wand 39 nach oben zu der Unterkante 16.

Im montierten Zustand gleitet der den Haken 55 bildende Blechzuschnitt 51 mit seinen beiden seitlichen Stegen 62 und 63 in den vertikal verlaufenden Nuten 57, während die nach außen stehenden Arme 66 des zweiten Klemmelementes 58 in der Nut 56 Platz finden, und zwar im Bereich zwischen dem Quersteg 40 und der Nut 47.

Die Handhabung und Funktionsweise der Sicherheitsnetzanordnung nach Fig. 1 sowie der Verankerungsmittel 24 ist wie folgt:

Das Rückhaltenetz 13 wird zunächst mit seinen oberen Verankerungsmitteln 19 in die beiden karosserieseitigen T-Nuten 22 eingehängt. Das Rückhaltenetz 13 hängt nun, ausgehend von seiner Oberkante 15 zusammen mit seinen beiden Verankerungsmitteln 24 schlaff nach unten. Die elastisch dehnbaren Bänder 29 der beiden Verankerungsmittel 24 sind entspannt, d.h. die von den Bändern 26 und 29 gebildete Schlaufe hat ihre geringste Länge, die einem kürzeren Abstand des unteren Schlaufenendes 72 von der unteren Netzkante 16 entspricht. In diesem Zustand befinden sich die Einhängeösen, in die die Haken 55 einzuhängen sind, in einem deutlichen Abstand unterhalb der Haken 55.

Zum Einhängen des betreffenden Hakens 55 ergreift der Benutzer den Schieber 69 und führt diesen nach unten. Dabei wird das dehnbare Band 29 nach unten in die Länge gezogen, was zu einer Verlängerung der Schlaufe und einer Verlagerung des unteren Schlaufenendes 72 nach unten führt. Aufgrund des Eigengewichtes bleibt die Klemmeinrichtung 33 ständig im Bereich des jeweiligen Schlaufenendes 72, d.h. das undehnbare Gurtband 26 gleitet durch den Spalt zwischen den beiden Klemmelementen 57 und 58 kräftefrei hindurch. Das Gewicht des Hakens 55, der über die Zwischenlage des Gurtbandes 26 auf dem zweiten Klemmelement 58 aufliegt, vermag keine Klemmkraft zu erzeugen, die ein Hindurchgleiten des Gurtbandes 26 verhindert.

Sobald der Haken 55 auf diese Weise weit genug nach unten geführt ist, um eingehängt zu werden, lässt der Benutzer den Schieber 69 los bzw. führt ihn nach oben. Wegen des Loslassens des Schiebers 69 kann das dehnbare Band 29 wirksam werden und das undehnbare Band 26 straffen, indem es dessen Ende 28 nach oben zieht. Dabei läuft wiederum ein Stück des Bandes 26 nach oben durch den Spalt zwischen der Kante 59 und der Stange 64 hindurch.

Dieser Vorgang wiederholt sich mit der anderen Verankerungseinrichtung 24, womit das Rückhaltenetz 13 aufgespannt ist. Die Spannkraft für das Rückhaltenetz 13 entspricht der Zugkraft, die die beiden dehnbaren Bändern 29 entwickeln.

Sollte im aufgespannten Zustand infogle eines starken Bremsvorgangs oder eines Auffahrunfalls ein Gegenstand aus dem Laderaum in Richtung auf den Fahrgastraum geschleudert werden, so trifft der Gegenstand auf das Rückhaltenetz 13 auf und versucht es, in den Fahrgastraum zu drängen. Diese Kraft führt zu einer zusätzlichen Zugkraft in dem undehnbaren Gurtband 26 jedes Verankerungsmittels 24. Diese Kraft ist bestrebt, entgegen der Wirkung des dehnbaren Bandes 29 das undehnbare Gurtband 26 durch den Spalt zwischen den beiden Klemmelementen 57 und 58 zurückzuziehen.

Diese Kraft will das von dem Gurtband 26 um etwas mehr als 180° umschlungene zweite Klemmelement 58 nach oben zu ziehen, das jedoch durch das in der Karosserie festgehaltene erste Klemmelement zurückgehalten wird.

Diese Zugkraft will außerdem das zweite Klemmelement 58 nach oben und nach vorne aus dem Langloch 61 herauszuziehen. Dies verhindern jedoch die sich mit entsprechend verstärkter Kraft an der Rückseite 53 der Stege 62 und 63 anlegenden Widerlagerflächen 67.

Auf diese Weise erhöht sich die Klemmkraft, mit der das undehnbare Gurtband zwischen den beiden Klemmelementen 57, 58 eingeklemmt wird. Es entsteht dort eine einklemmende Kraft, die ein Nachrutschen des Gurtbandes 26 verhindert. Je größer nun die Kraft wird, die in dem Gurtband 26 wirkt, umso größer wird die Kraft, mit der das zweite Klemmelement 58 gegen die Kante 59, die das erste Klemmelement 57 darstellt, angepresst wird, denn der Haken 55 ist ortsfest in der Karosserie verankert.

Begünstigt wird diese Wirkung noch durch den Umstand, dass das zweite Klemmelement 58 umschlungen wird, so dass zu der Klemmkraft zwischen dem ersten und dem zweiten Klemmelement 57 und 58 noch die Haftreibung hinzukommt, mit der das Gurtband 26 auf der Außenumfangsfläche des zweiten Klemmelementes 58 festgehalten wird.

Durch geeignete Wahl des Abstandes zwischen den Widerlagerflächen 67 und der Stange 64 bzw. der Dicke des Blechzuschnitts 51 lässt sich in weiten Grenzen die oben beschriebene selbstverstärkende Eigenschaft der Klemmeinrichtung 33 variieren. In jedem Falle muss dafür gesorgt werden, dass bei einer Zugkraft in dem undehnbaren Gurtband 26 sich die Klemmkraft zwischen den beiden Klemmelementen 57 und 58 erhöht, um ein Durchrutschen des undehnbaren Gurtbandes 26 zu verhindern; sie müssen eine gewisse Servowirkung zeigen.

Beim Herausnehmen der Rückhaltenetzanordnung wird die Verklemmung aufgehoben. Der Benutzer ergreift wiederum den Schieber 69 und führt ihn nach unten. Dadurch wird das Gurtband 26 in dem Bereich zwischen dem Schieber 69 und der Klemmeinrichtung 33 entspannt und es fällt auch die Vorspannkraft weg, mit der der Haken 55 gegen die Umfangsfläche des zweiten Klemmelementes 58 gezogen wird. Der Wegfall dieser Andruckkraft beseitigt die Klemmwirkung und das undehnbare Gurtband 26 kann frei zwischen den beiden Klemmelementen 57 und 58 hindurchgleiten. Sobald auf diese Weise der Haken 55 weit genug nach unten geführt ist, kommt er aus den Einhängeösen frei und der Benutzer kann den Schieber 69 loslassen. Das dehnbare Band 29 verkürzt sich daraufhin wieder auf die Ruhelänge und der Haken 55 befindet sich oberhalb der betreffenden Öse.

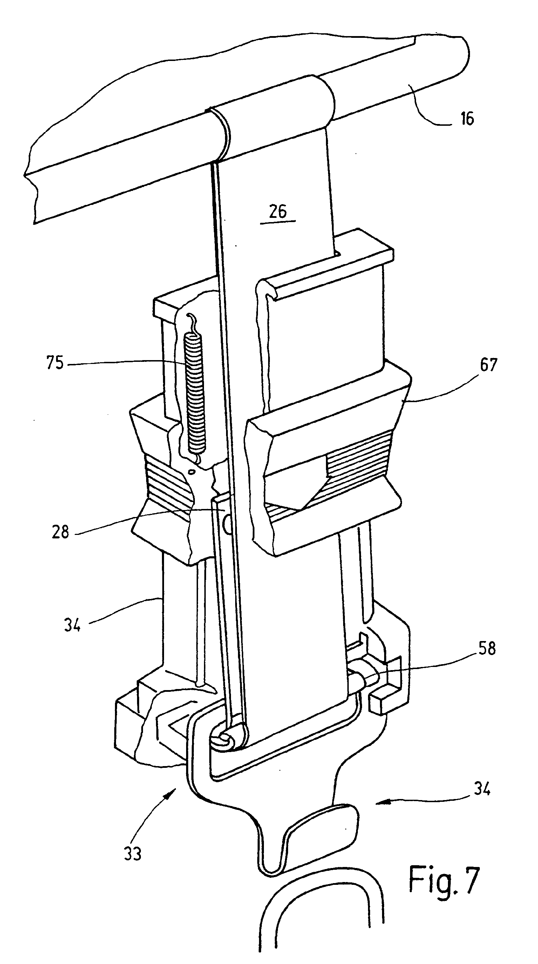

Die Ausführungsform des Verankerungsmittels nach den Fig. 3 bis 6 erfordert ein dehnbares Band, das ebenfalls an der Unterkante 16 des Rückhaltenetzes 13 verankert ist. Wenn dies als unzweckmäßig empfunden wird, kann die Lösung nach Fig. 7 zum Einsatz kommen. Dieses Ausführungsbeispiel unterscheidet sich hinsichtlich des Aufbaus der Klemmeinrichtung 33 und der Einhängeeinrichtung 34 nicht von dem vorherigen Ausführungsbeispiel. Auch das undehnbare Gurtband 26 zeigt in dem Halter denselben Verlauf bis hin zu dem Schieber 69. Der einzige wesentliche Unterschied besteht darin, dass anstelle des dehnbaren Bandes 29 eine oder mehrere Zugfedern 75 verwendet werden, die einenends an dem Schieber 69 angreifen und andernends an dem Halter 35 oberhalb des Schiebers 69. Der Halter 35 ist hierzu oben ein Stück weit verlängert und die eine oder die mehreren Federn 65 greifen an einem Steg des Schiebers 69 an, der von der Seite her über ein Langloch in den Raum zwischen den beiden Wänden 38 und 39 hineinführt.

Die Wirkungsweise der Feder 75 ist wie folgt:

Die Zugfeder 75 ist bestrebt, den Schieber 69 soweit wie möglich nach oben zu ziehen. Da die Lage des zweiten Klemmelementes 58 im unteren Teil des Halters 35 fixiert ist, führt eine Verkürzung der Länge der Feder 75 dazu, dass das untere Schlaufenende 72 nach oben in Richtung auf die Unterkante 16 des Rückhaltenetzes 13 bewegt wird. Umgekehrt bewegt sich das Schlaufenende 72 nach unten, wenn der Benutzer den Schieber 69 nach unten führt, was von einer Streckung der Zugfeder 75 begleitet ist.

Die Klemmwirkung der Klemmeinrichtung 33 ist dieselbe wie zuvor beschrieben, weshalb sich eine erneute Erläuterung erübrigt.

Wenn ein größerer Hub gewünscht ist, besteht auch die Möglichkeit, anstelle der Zugfeder 75 beispielsweise einen Gurtwickler mit einem Federmotor zu verwenden.

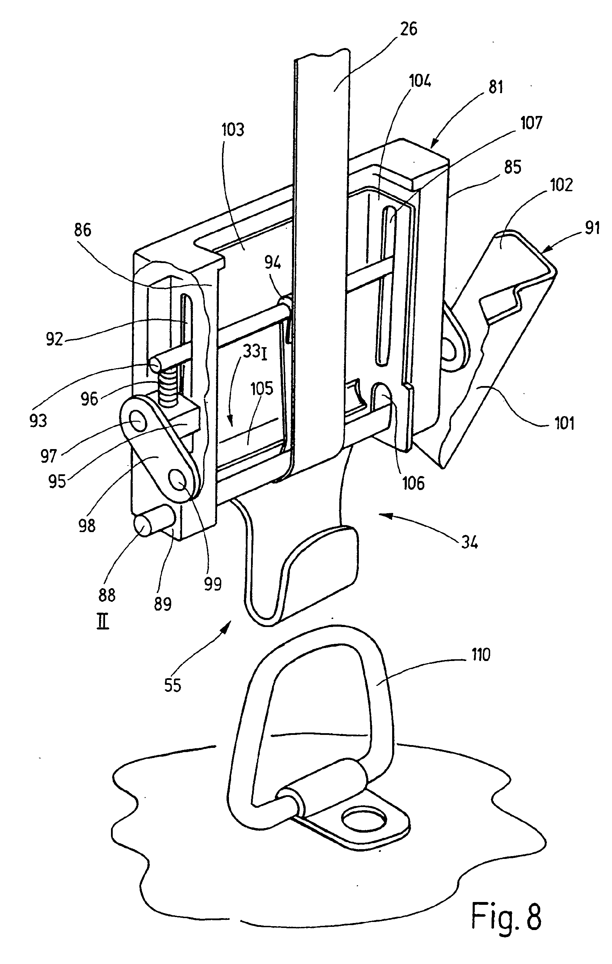

Fig. 8 zeigt ein Ausführungsbeispiel, das bei verkürztem Federhub in der Lage ist, die Karosserietoleranzen auszugleichen. Soweit bei dem Ausführungsbeispiel nach den Fig. 8 bis 10 bereits erläuterte Bauteile Verwendung finden, werden dieselben Bezugszeichen verwendet. Das undehnbare Gurtband 26 ist lediglich in der Breite verringert veranschaulicht, um in der perspektivischen Darstellung von Fig. 8 den Aufbau erkennen zu können.

Das Verankerungsmittel nach den Fig. 8 bis 10 weist ein becherartiges Kunststoffgehäuse 81 auf mit zwei Flachseiten 82 und 83, einem nach oben weisenden Boden 84 sowie zwei Schmalseiten 85 und 86. Nach unten zu ist das Gehäuse 81 offen.

Zum Eintritt des undehnbaren Gurtbandes 26 enthält das Gehäuse 81 in seinem Boden 84 eine entsprechende rechteckige Öffnung 87.

In der Nähe des unteren Endes befindet sich eine zylindrische Stange 88, die in zwei miteinander fluchtenden Bohrungen 89 in den beiden Schmalseiten 85 und 86 steckt. Diese zylindrische Stange 88 dient einerseits als Umlenkstelle für das undehnbare Gurtband 26 und somit als zweites Klemmelement 58, und außerdem sind ihre nach außen über die beiden Schmalseiten 85 und 86 überstehenden Enden Lagerzapfen für einen Spannhebel 91.

Oberhalb der Stange 88 enthalten die Schmalseiten 85 und 86 zwei miteinander fluchtende Langlöcher 92, durch die eine zu der Stange 88 parallele Widerlagerstange 93 hindurchführt. Auf der Widerlagerstange 93 steckt eine Schlaufe 94, die das untere Ende des undehnbaren Gurtbandes 26 darstellt.

Neben der Schmalseite 86 und auf deren Außenseite ist ein Widerlagerschieber 95 längsverschieblich geführt. Ein entsprechendes zweiten Widerlagerschieber 95 befindet sich neben der nicht erkennbaren Außenseite der Schmalseite 85. Aus Übersichtlichkeitsgründen sind auch die Führungsbahnen zum Führen des Widerlagerschiebers 95 nicht dargestellt. Zwischen dem Widerlagerschieber 95 und den nach außen überstehenden Enden der Widerlagerstange 93 sind zwei Druckfedern 96 eingefügt, die bestrebt sind, die Widerlagerstange 93 nach oben in Richtung auf den Boden 84 zu verschieben.

Die Bewegung der Widerlagerschieber 95 geschieht mit Hilfe eines an dem Widerlagerschieber 95 bei 97 angelenkten Hebels 98, dessen anderes Ende mit einer Lagerbohrung 99 an dem Spannhebel 91 angelenkt ist. Der Spannhebel 91 ist ein U-förmiges Teil mit einem Rücken 101 und zwei von dem Rücken ausgehenden seitlichen Flanschen 102, von denen wegen der weggebrochenen Darstellung in Fig. 8 lediglich der eine zu erkennen ist.

Der Spannhebel 91 enthält in seinen beiden seitlichen Flanschen 102 zwei miteinander fluchtende Bohrungen, durch die die seitlich überstehenden Zapfenenden der Umlenkstange 88 hindurchführen.

Im Abstand davon sind in den beiden seitlichen Flanschen 102 zwei weitere miteinander fluchtende Bohrungen für Lagerzapfen vorgesehen, die in den Bohrungen 99 der Hebel 98 stecken. Auf diese Weise bilden die Hebel 98 zusammen mit einem entsprechenden Abschnitt der seitlichen Flansch 102 des Spannhebels 91 Kniehebel, die in der Lage sind, entgegen der Wirkung der Druckfedern 96 die Widerlagerschieber 95 nach oben zu drücken.

Die Einhängeeinrichtung 34 besteht wiederum aus einem Blechzuschnitt, wobei das untere Teil, wie bei den vorherigen Ausführungsbeispielen gestaltet ist. Der obere Abschnitt ist U-förmig gebogen und besteht aus einem Rücken 103, an dem zwei seitliche Flansche 104 angeformt sind. Wegen der perspektivischen Darstellung ist in der Figur lediglich einer der beiden Flansche 104 zu erkennen. Der Abstand der beiden Flansche 104 voneinander entspricht der lichten Weite der zueinander parallelen Seiten der beiden Schmalseiten 85 und 86. Auf diese Weise ist der U-förmige Bereich der Einhängeeinrichtung 34 längsverschieblich in dem Gehäuse 81 geführt, und zwar rechtwinkelig zu der Stange 88.

Aus dem Rückenteil 103 ist in der Nähe des unteren Endes eine Leiste 105 ausgeklinkt, die in Richtung auf die Umlenkstange 88 schräg vorsteht.

Zum Durchtritt der Umlenkstange 88 sowie der Widerlagerstange 93 enthalten die beiden seitlichen Flansche 104 entsprechende miteinander fluchtende Langlöcher 106 und 107. Das Langloch 106 hat eine Erstreckung in Richtung parallel zur Vertikalachse des Gehäuses 81, die es der Leiste 105 ermöglicht, sich in der später beschriebenen Weise der Stange 88 zu nähern.

Die Langlöcher 107 sind in ihren Abmessungen auf die Langlöcher 92 abgestimmt, damit in jeder möglichen Betriebsstellung der Einhängeeinrichtung 34 der Bewegungshub der Widerlagerstange 93 nicht behindert wird.

Die Stange 88 sowie die Leiste 105 bilden gleichzeitig die beiden Klemmelemente 57 und 58 der Klemmeinrichtung 33.

Die Funktionsweise ist wie folgt:

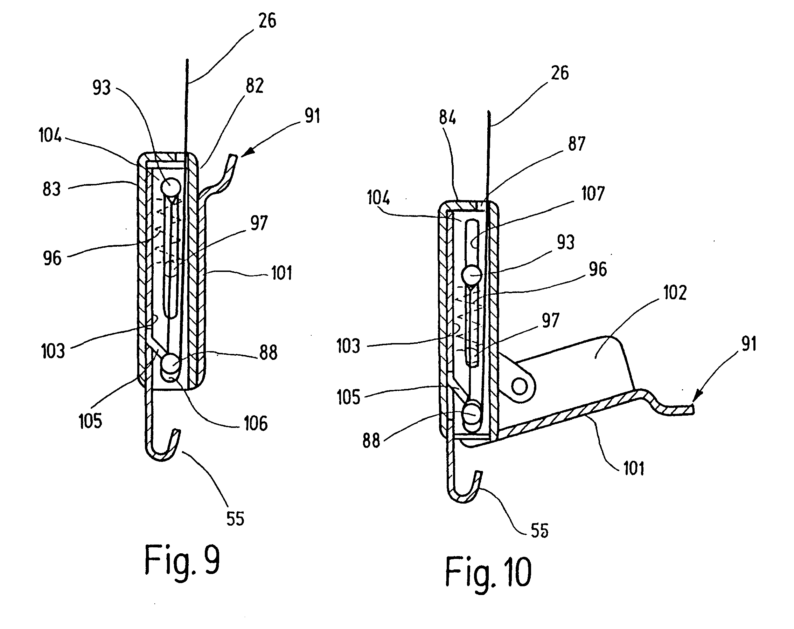

Nachdem das Rückhaltenetz 13 mit den oberen Verankerungsmitteln 19 in die T-Nuten 22 eingesetzt ist und die unteren Verankerungsmittel 24 lose herunterhängen, werden an beiden Verankerungsmitteln 24 die Spannhebel 91 aus der in Fig. 9 gezeigten Stellung nach unten in die in Fig. 10 gezeigte Stellung heruntergeklappt. Durch das Herunterschwenken des Spannhebels 91 werden die Widerlagerschieber 95 in ihre untere Endlage bewegt. Je nach Länge der Druckfedern 96 folgt die Widerlagerstange 93 nach unten oder sie bleibt am oberen Ende der Langlöcher 92 leicht angedrückt. Der Benutzer erfasst nun mit der Hand das Gehäuse 81 und führt es nach unten. Bei dieser Abwärtsbewegung muss die Länge des Abschnitts des undehnbaren Zuggurtes 26 zwischen der Unterkante 16 und der Stange 88 verlängert werden, weshalb entsprechend Gurt aus dem Abschnitt zwischen der Stange 88 und der Widerlagerstange 93 nachgezogen wird. Das undehnbare Gurtband 26 gleitet zwischen der Leiste 105 und der Stange 88 frei hindurch, weil der relativ leichte Haken 55 keine ausreichende Klemmkraft erzeugt.

Sobald das Gehäuse 81 weit genug nach unten geführt ist, damit der Haken 55 in die darunter befindliche Öse 110 eingehängt werden kann, lässt der Benutzer das Gehäuse 81 los bzw. führt es nach oben, wodurch der Haken 55 in der Öse 110 verhakt und mit Hilfe der Druckfedern 86 der undehnbare Zuggurt 26 gestrafft wird. Sodann schwenkt der Benutzer den Spannhebel 91 nach oben, bis sein Rückenteil 101 an der entsprechenden Flachseite 82 des Gehäuses 81 anliegt. Durch diese Aufwärtsbewegung werden auch die beiden Hebel 98 nach oben geschoben und verschwenkt. Dies führt zu einer Aufwärtsbewegung der Widerlagerschieber 95 und damit zu einer Verkürzung des Abstandes der Widerlagerschieber 95 von der Widerlagerstange 93. Entsprechend größer wird die Vorspannkraft, mit der die Stange 93 von der Stange 88 weggedrückt wird. Gleichzeitig entsteht hierdurch eine Kraft, mit der die freie Kante der Leiste 105 gegen das Gurtband 26 und damit gegen die Stange 88 gedrückt wird, die das zweite Klemmelement 58 darstellt.

Wenn in dieser Stellung ein Gegenstand gegen das Rückhaltenetz 13 geschleudert wird, entsteht in dem undehnbaren Gurtband 26 eine Zugkraft, die bestrebt ist, das undehnbare Gurtband 26 um die Stange 88 herumzuziehen. Gleichzeitig entsteht aber auch eine Kraft, die die Stange 88 anheben will. Da die Lage der Leiste 105 aufgrund des eingehängten Hakens 55 fixiert ist und die Stange 88 sich unter Zwischenlage des Gurtbands 26 dagegen abstützt, führt dies dazu, dass mit erhöhter Kraft der undehnbare Gurt 26 zwischen der Leiste 105 als erstes Klemmelement 57 und der Stange 88 als zweites Klemmelement 58 eingeklemmt wird. Die Umschlingung hat ferner eine Haftreibung zur Folge, die die Haltekraft für das undehnbare Gurtband 26 erhöht. Es kann nicht durchrutschen und blockiert eine weitere Bewegung des Rückhaltenetzes 13 in den Fahrgastraum hinein.

Zum Aushängen wird der Spannhebel 91 nach unten verschwenkt und das Gehäuse 81 von Hand nach unten geführt. In dem Augenblick, in dem der Benutzer das Gehäuse 81 anfasst und nach unten bewegt, verschwindet die Hakenkraft und damit auch die Kraft, mit der die Leiste 105 gegen das Gurtband 26 und die Stange 88 gepresst wird. Da nun keine Klemmwirkung auftritt, kann das undehnbare Gurtband 26 praktisch frei um die Stange 88 herumgleiten, um ein Aushängen des Hakens 55 aus der Öse 110 zu ermöglichen.

Der Vorteil der Lösung nach den Fig. 8 bis 10 besteht darin, dass der Federhub kleiner sein kann als die Summe aus maximaler Karosserietoleranz zuzüglich dem Hub, der erforderlich ist, um den Haken 55 in die Öse 110 einzuhängen. Der Federhub wird ergänzt durch den Hub, den die beiden Widerlagerschieber 95 beim Verschwenken des Spannhebels 91 durchlaufen.

Umgekehrt kann die Anordnung auch so dimensioniert werden, dass die Haken mit verhältnismäßig kleiner Betätigungskraft eingehängt werden können und die Vorspannkraft in dem Rückhaltenetz 13 durch das Hochschwenken der Spannhebel 91 deutlich vergrößert wird. Eine höhere Spannung in dem Rückhaltenetz 13 hat geringere Schwingungen desselben im Gebrauch zur Folge.

Bei einer Rückhaltenetzanordnung wird die untere Kante des Rückhaltenetzes mit zwei Verankerungsmitteln im Fahrzeug festgelegt. Zu den Verankerungsmitteln gehören zwei undehnbare Zugmittel, die im eingehängten Zustand durch Vorspannmittel unter einer entsprechenden Vorspannung gehalten werden. Eine selbstätig wirkende Klemmeinrichtung leitet sowohl die Vorspannkräfte zum Spannen des Rückhaltenetzes in die Karosserie ein als auch die erhöhten Kräfte, die auftreten, wenn ein Gegenstand gegen das Rückhaltenetz geschleudert wird.

## Patentansprüche

1. Rückhaltenetzanordnung, das dazu vorgesehen ist bei einem Kraftfahrzeug einen Laderaum von einem Fahrgastraum abzutrennen,
mit einem eine erste und eine dazu im Wesentlichen parallele zweite Kante (15,16) aufweisenden Rückhaltenetz (13),
mit der ersten Kante (15) zugeordneten ersten Verankerungsmitteln (18,19), die dazu eingerichtet sind, die erste Kante (15) des Rückhaltenetzes (13) lösbar in dem Fahrzeug zu verankern,
mit wenigsten einem biegsamen und undehnbaren Zugmittel (26), das unter Ausbildung einer Schlaufe, die ein von der zweiten Kante (16) abliegendes Schlaufenende (72) bildet, um 180° umgeschlagen ist und das ein erstes Ende (27), das an der zweiten Kante (16) des Rückhaltenetzes (13) verankert ist, sowie ein zweites Ende (28) aufweist,
mit Vorspannmitteln (29,75,96), die an dem zweiten Ende (28) des undehnbaren Zugmittels (26) angreifen und im Sinne einer Verminderung des Abstands zwischen dem Schlaufenende (72) und der zweiten Kante (16) wirksam sind,
mit einer Klemmeinrichtung (33), durch die das Zugmittel (26) hindurchführt und die auf das Zugmittel (26) zumindest dann eine Klemmkraft ausübt, wenn das Rückhaltenetz (13) belastet wird, und
mit einer mit der Klemmeinrichtung (33) verbundenen Einhängeeinrichtung (34) zum Verbinden der Klemmeinrichtung (33) mit dem Fahrzeug.

2. Rückhaltenetzanordnung nach Anspruch 1, **dadurch gekennzeichnet, dass** undehnbare Zugmittel (26) von einem Band gebildet ist.

3. Rückhaltenetzanordnung nach Anspruch 1, **dadurch gekennzeichnet, dass** Vorspannmittel wenigstens ein elastisches Glied (29,75,96) aufweist das einends mit dem zweiten Ende (28) des Zugmittels (26) mittelbar oder unmittelbar verbunden ist.

4. Rückhaltenetzanordnung nach Anspruch 3, **dadurch gekennzeichnet, dass** das elastische Glied (29) anderenends mit der zweiten Kante (16) des Rückhaltenetzes (13) verbunden ist.

5. Rückhaltenetzanordnung nach Anspruch 3, **dadurch gekennzeichnet, dass** das elastische Glied (75,96) anderenends mit der Klemmeinrichtung (33) verbunden ist.

6. Rückhaltenetzanordnung nach Anspruch 3, **dadurch gekennzeichnet, dass** das elastische Glied (29,75) ein dehnbares Glied ist.

7. Rückhaltenetzanordnung nach Anspruch 3, **dadurch gekennzeichnet, dass** das elastische Glied (96) ein Druckglied ist.

8. Rückhaltenetzanordnung nach Anspruch 1, **dadurch gekennzeichnet, dass** die Klemmeinrichtung (33) derart gestaltet ist, dass sich die Klemmkraft erhöht, wenn sich zwischen dem Rückhaltenetz (13) und der Einhängeeinrichtung (34) die Zugkraft erhöht.

9. Rückhaltenetzanordnung nach Anspruch 1, **dadurch gekennzeichnet, dass** der Klemmeinrichtung (33) Servomittel (57,58) zugeordnet sind derart, dass sich die Klemmkraft erhöht, wenn sich zwischen dem Rückhaltenetz (13) und der Einhängeeinrichtung (34) die Zugkraft erhöht.

10. Rückhaltenetzanordnung nach Anspruch 1, **dadurch gekennzeichnet, dass** die Klemmeinrichtung (33) ein erstes und ein zweites Klemmelement (57,58) aufweist, zwischen denen das Zugmittel (26) hindurch verläuft und von denen das erste (57) mit der Einhängeeinrichtung (34) verbunden ist.

11. Rückhaltenetzanordnung nach Anspruch 10, **dadurch gekennzeichnet, dass** das zweite Klemmelement (58) als Umlenkglied für das undehnbare Zugmittel (26) dient und das Schlaufenende (72) definiert.

12. Rückhaltenetzanordnung nach Anspruch 10, **dadurch gekennzeichnet, dass** die Vorspannmittel (75,96) zwischen dem zweiten Ende (28) des Zugmittels (26) und dem zweiten Klemmelement (58) wirksam sind.

13. Rückhaltenetzanordnung nach Anspruch 1, **dadurch gekennzeichnet, dass** für die Vorspannmittel (96) Widerlagermittel (95) vorgesehen sind, deren Abstand von dem zweiten Klemmelement (58,88) veränderbar ist.

14. Rückhaltenetzanordnung nach Anspruch 10, **dadurch gekennzeichnet, dass** die Klemmeinrichtung (33) ein Gehäuse (35,81) aufweist, in das das Zugmittel (26) hineinführt, in dem das zweite Klemmelement (58) angeordnet und in dem die Einhängeeinrichtung (34) in Richtung parallel zu der Längserstreckung des Zugmittels (26) verschieblich gelagert ist.

15. Rückhaltenetzanordnung nach Anspruch 14, **dadurch gekennzeichnet, dass** das zweite Klemmelement (58) von einer Stange (88) gebildet ist die starr in dem Gehäuse (81) angeordnet ist.

16. Rückhaltenetzanordnung nach Anspruch 1, **dadurch gekennzeichnet, dass** das zweite Klemmelement (58) von einer Stange (64) gebildet ist, die quer zu der Bewegungsrichtung der Einhängeeinrichtung (34) in dem Gehäuse (35) beweglich gelagert ist.

17. Rückhaltenetzanordnung nach Anspruch 1, **dadurch gekennzeichnet, dass** die Stange (64) an ihren beiden Enden jeweils einen radial verlaufenden Arm (65) trägt, der an seinem freien Ende einen parallel zu der Stange (64) verlaufenden Fortsatz (66) trägt, und dass die beiden Fortsätze (66) in einer gemeinsamen Ebene liegen.

18. Rückhaltenetzanordnung nach Anspruch 10, **dadurch gekennzeichnet, dass** das erste Klemmelement (57) von einer an der Einhängeeinrichtung (34) ausgebildeten Kante (59, 105) gebildet ist.

19. Rückhaltenetzanordnung nach Anspruch 18, **dadurch gekennzeichnet, dass** die Kante (59) ein Abschnitt eines Randes einer Öffnung (61) ist.

20. Rückhaltenetzanordnung nach Anspruch 18, **dadurch gekennzeichnet, dass** die Kante an einer Leiste (105) ausgebildet ist.

## Claims

1. Safety mesh arrangement, which is provided to separate a luggage area from a passenger area in a motor vehicle,
with a safety mesh (13) having a first edge (15) and a second edge (16) substantially parallel thereto,
with first anchoring elements (18, 19) associated with the first edge (15) fitted for detachably anchoring the first edge (15) of the safety mesh (13) in the vehicle,
with at least one pliant and non-extensible pulling element (26), which is wound around 180° to configure a loop forming a loop end (72) remote from the second edge (16), and which has a first end (27) anchored to the second edge (16) of the safety mesh (13) and also a second end (28),
with biasing elements (29, 75, 96), which act on the second end (28) of the non-extensible pulling element (26) and are active in the sense of reducing the distance between the loop end (72) and the second edge (16),
with a clamping means (33), through which the pulling element (26) passes and which exerts a clamping force on the pulling element (26) at least when the safety mesh (13) is stressed, and
with a hook attachment means (34) connected to the clamping means (33) for connecting the clamping means (33) to the vehicle.

2. Safety mesh arrangement according to Claim 1, **characterised in that** the non-extensible pulling element (26) is formed by a strap.

3. Safety mesh arrangement according to Claim 1, **characterised in that** the biasing element has at least one elastic member (29, 75, 96), which is joined at one end directly or indirectly to the second end (28) of the pulling element (26).

4. Safety mesh arrangement according to Claim 3, **characterised in that** the elastic member (29) is joined at the other end to the second edge (16) of the safety mesh (13).

5. Safety mesh arrangement according to Claim 3, **characterised in that** the elastic member (75, 96) is joined at the other end to the clamping means (33).

6. Safety mesh arrangement according to Claim 3, **characterised in that** the elastic member (26, 75) is an extensible member.

7. Safety mesh arrangement according to Claim 3, **characterised in that** the elastic member (96) is a pressure member.

8. Safety mesh arrangement according to Claim 1, **characterised in that** the clamping means (33) is configured in such a way that the clamping force increases when the tensile force increases between the safety mesh (13) and the hook attachment means (34).

9. Safety mesh arrangement according to Claim 1, **characterised in that** the clamping means (33) has associated servo elements (57,58) such that the clamping force increases when the tensile force increases between the safety mesh (13) and the hook attachment means (34).

10. Safety mesh arrangement according to Claim 1, **characterised in that** the clamping means (33) has a first and a second clamping element (57, 58), between which the pulling element (26) runs and the first (57) of which is connected to the hook attachment means (34).

11. Safety mesh arrangement according to Claim 10, **characterised in that** the second clamping element (58) serves as deflecting member for the non-extensible pulling element (26) and defines the loop end (72).

12. Safety mesh arrangement according to Claim 10, **characterised in that** the biasing elements (75, 96) are active between the second end (28) of the pulling element (26) and the second clamping element (58).

13. Safety mesh arrangement according to Claim 1, **characterised in that** abutment elements (95), the spacing of which can be varied by the second clamping element (58, 88), are provided for the biasing elements (96).

14. Safety mesh arrangement according to Claim 10, **characterised in that** the clamping means (33) has a housing (35, 81), into which the pulling element (26) extends, in which the second clamping element (58) is arranged and in which the hook attachment means (34) is disposed to be displaceable in a parallel direction to the longitudinal extension of the pulling element (26).

15. Safety mesh arrangement according to Claim 14, **characterised in that** the second clamping element (58) is formed by a rod (88), which is rigidly arranged in the housing (81).

16. Safety mesh arrangement according to Claim 1, **characterised in that** the second clamping element (58) is formed by a rod (64), which is disposed in the housing (35) to be movable transversely to the direction of movement of the hook attachment means (34).

17. Safety mesh arrangement according to Claim 1, **characterised in that** at both its ends the rod (64) respectively bears a radially running arm (65), which at its free end bears an extension (66) running parallel to the rod (64), and that the two extensions (66) lie in a common plane.

18. Safety mesh arrangement according to Claim 10, **characterised in that** the first clamping element (57) is formed by an edge (59, 105) configured on the hook attachment means (34).

19. Safety mesh arrangement according to Claim 18, **characterised in that** the edge (59) is a section of an edge of an opening (61).

20. Safety mesh arrangement according to Claim 18, **characterised in that** the edge is configured on a bar (105).

## Revendications

1. Agencement de filet de retenue qui est prévu dans un véhicule automobile pour séparer un espace à bagages d'un habitacle, comprenant
un filet de retenue (13) présentant un premier bord (15) et un deuxième bord (16) qui est sensiblement parallèle au premier bord,
des premiers moyens de fixation (18, 19) associés au premier bord (15), qui sont conçus pour fixer le premier bord (15) du filet de retenue (13) de façon amovible dans le véhicule,
au moins un moyen de traction (26) flexible et non extensible qui est rabattu de 180° en formant une boucle comportant une extrémité de boucle (72) éloignée du deuxième bord (16), et qui présente une première extrémité (27), fixée au deuxième bord (16) du filet de retenue (13), ainsi qu'une deuxième extrémité (28),
des moyens de précontrainte (29, 75, 96) qui sont en prise avec la deuxième extrémité (28) du moyen de traction (26) non extensible et agissent dans le sens d'une diminution de la distance entre l'extrémité de boucle (72) et le deuxième bord (16),
un dispositif de serrage (33) dans lequel passe le moyen de traction (26) et qui exerce une force de serrage sur le moyen de traction (26) au moins lorsque le filet de retenue (13) est sollicité, et
un dispositif d'accrochage (34) lié au dispositif de serrage (33) et destiné à relier le dispositif de serrage (33) au véhicule.

2. Agencement de filet de retenue selon la revendication 1, **caractérisé en ce que** le moyen de traction (26) non extensible est formé d'une bande.

3. Agencement de filet de retenue selon la revendication 1, **caractérisé en ce que** le moyen de précontrainte présente au moins un élément élastique (29, 75, 96), dont une extrémité est reliée directement ou indirectement à la deuxième extrémité (28) du moyen de traction (26).

4. Agencement de filet de retenue selon la revendication 3, **caractérisé en ce que** l'élément élastique (29) est relié par son autre extrémité au deuxième bord (16) du filet de retenue (13).

5. Agencement de filet de retenue selon la revendication 3, **caractérisé en ce que** l'élément élastique (75, 96) est relié par son autre extrémité au dispositif de serrage (33).

6. Agencement de filet de retenue selon la revendication 3, **caractérisé en ce que** l'élément élastique (29, 75) est un élément extensible.

7. Agencement de filet de retenue selon la revendication 3, **caractérisé en ce que** l'élément élastique (96) est un élément de compression.

8. Agencement de filet de retenue selon la revendication 1, **caractérisé en ce que** le dispositif de serrage (33) est agencé de manière telle que la force de serrage augmente lorsque la force de traction entre le filet de retenue (13) et le dispositif d'accrochage (34) augmente.

9. Agencement de filet de retenue selon la revendication 1, **caractérisé en ce que** des servo-éléments (57, 58) sont associés au dispositif de serrage (33), de manière telle que la force de serrage augmente lorsque la force de traction entre le filet de retenue (13) et le dispositif d'accrochage (34) augmente.

10. Agencement de filet de retenue selon la revendication 10, **caractérisé en ce que** le dispositif de serrage (33) présente un premier et un deuxième élément de serrage (57, 58), entre lesquels passe le moyen de traction (26) et parmi lesquels le premier élément (57) est relié au dispositif d'accrochage (34).

11. Agencement de filet de retenue selon la revendication 10, **caractérisé en ce que** le deuxième élément de serrage (58) sert d'élément de renvoi pour le moyen de traction (26) non extensible et définit l'extrémité de boucle (72).

12. Agencement de filet de retenue selon la revendication 10, **caractérisé en ce que** les moyens de précontrainte (75, 96) agissent entre la deuxième extrémité (28) du moyen de traction (26) et le deuxième élément de serrage (58).

13. Agencement de filet de retenue selon la revendication 1, **caractérisé en ce qu'**il est prévu pour les moyens de précontrainte (96) des moyens de contre-appui (95) dont l'espacement peut être modifié par le deuxième élément de serrage (58, 88).

14. Agencement de filet de retenue selon la revendication 10, **caractérisé en ce que** le dispositif de serrage (33) présente un boîtier (35, 81) dans lequel s'engage le moyen de traction (26), dans lequel est installé le deuxième élément de serrage (58) et dans lequel le dispositif d'accrochage (34) est monté avec possibilité de déplacement dans la direction parallèle à la longueur du moyen de traction (26).

15. Agencement de filet de retenue selon la revendication 14, **caractérisé en ce que** le deuxième élément de serrage (58) est constitué d'une tige (88) qui est montée rigidement dans le boîtier (81).

16. Agencement de filet de retenue selon la revendication 1, **caractérisé en ce que** le deuxième élément de serrage (58) est constitué d'une tige (64) qui est montée dans le boîtier (35), transversalement à la direction de déplacement du dispositif d'accrochage (34).

17. Agencement de filet de retenue selon la revendication 1, **caractérisé en ce que** la tige (64) présente à ses deux extrémités respectivement un bras (65) radial, lequel porte à son extrémité libre un prolongement (66) parallèle à la tige (64), et **en ce que** les deux prolongements (66) se situent dans un même plan.

18. Agencement de filet de retenue selon la revendication 10, **caractérisé en ce que** le premier élément de serrage (57) est constitué d'une arête (59, 105) aménagée sur le dispositif d'accrochage (34).

19. Agencement de filet de retenue selon la revendication 18, **caractérisé en ce que** l'arête (59) est une partie d'un bord d'une ouverture (61).

20. Agencement de filet de retenue selon la revendication 18, **caractérisé en ce que** l'arête est aménagée sur une traverse (105).
